**Europäisches Patentamt**

**European Patent Office**

**Office européen des brevets**

(11) Publication number: **0 185 772**
**B1**

# (12) EUROPEAN PATENT SPECIFICATION

(45) Date of publication of patent specification: **13.06.90**

(21) Application number: **85903050.4**

(22) Date of filing: **18.06.85**

(86) International application number:
**PCT/JP85/00345**

(87) International publication number:
**WO 86/00271 16.01.86 Gazette 86/02**

(51) Int. Cl.⁵: **B 62 K 17/00, B 62 M 1/02**

(54) **PARALLEL WHEELED DEVICE.**

(30) Priority: **19.06.84 JP 91278/84**

(43) Date of publication of application:
**02.07.86 Bulletin 86/27**

(45) Publication of the grant of the patent:
**13.06.90 Bulletin 90/24**

(84) Designated Contracting States:
**DE FR**

(56) References cited:
**DE-C- 25 924**
**JP-A-58 101 887**
**JP-U-48 835 51**
**US-A-3 143 362**
**US-A-3 190 675**
**US-A-3 338 593**

(73) Proprietor: **ISHIZAKI, Masao**
**Ro-No. 537, Asahi-shi**
**Chiba-ken 289-25 (JP)**

(72) Inventor: **ISHIZAKI, Miyoji**
**Ro-No. 954, Asahi-shi**
**Chiba-ken 289-25 (JP)**

(74) Representative: **Maureau, Philippe et al**
**Cabinet Germain & Maureau Le Britannia - Tour**
**C 20, bld Eugène Déruelle**
**F-69003 Lyon (FR)**

## Description

### Technical Field

This invention relates to dicycles which are used for recreation, exercise as well as for practical purposes.

### Background of Art

A bicycle is widely used not only for practical purposes but also for exercise. However, since a bicycle is comparatively easy to ride, one cannot expect a satisfactory result of exercise unless one rides it for a long distance. A monocycle is also utilized, but it is very difficult to ride; therefore, it is not recommendded for everyone, especially for the aged.

This invention deals with a dicycle which requires a reasonable amount of skill and energy in operation and yet, once the knack of riding is achieved, can be managed by anyone and also can be easily stopped for a rest, and the improvement thereof.

This history of dicycles goes back a long time. Way back in 1881, Otto developed a dicycle comprising a pair of parallel wheels and a crankshaft provided with foot pedals. The Otto's dicycle required precision since it was constructed in such a way as to require application of brake when changing directions by loosening a driving belt for one of the wheels and sliding a pulley ("History of Invention, Bicycles", pp. 33-34, published by Corporation of Invention Association, in Japanese).

A dicycle has since then completely disappeared from the scene, although it was described in more recent documents, e.g. US—A—3 143 362. This document discloses a dicycle comprising a pair of parallel wheels and a crankshaft provided with foot pedals for rotating the wheels, said wheels being attached to both ends of the crankshaft acting as an axle; control rods are provided on each side of the dicycle, and lower members of said control rods, which are lower than the axle, are so constructed as to contact the ground at a position different from where the vertical line passing through the center of the axle so touches it. The rods only move vertically and are intended to keep the dicycle standing at rest. Said rods are not intended for changing direction, and other complicated structures are provided in US—A—3 143 362 for change of directions.

The present invention manages to solve the problem of change of direction, in a dicycle of the previously indicated kind, by a simple and satisfactory structure.

### Disclosure of the Invention

A dicycle according to the invention belongs to the kind comprising a pair of parallel wheels and a crankshaft provided with foot pedals for rotating the wheels, said wheels being attached to both ends of the crankshaft acting as an axle, in which control rods are provided and lever members of said control rods, which are lower than the axle are so constructed as to contact the ground at a position different from where the vertical line passing through the center of the axle so touches it, in a known manner. According to the new and characteristic feature of the present invention, said control rods are pivotable about said axle so that, by pulling said control rods, the rider can cause the tips of the lever members to push the ground, so as to cause the wheel on the side where the control rod is pulled to raise from the ground and to rotate idly.

### Brief Description of the Drawings

In the drawings:

Figs. 1—5 show an embodiment of the present invention:

Fig. 1 is a front elevational view of a dicycle according to the present invention;

Fig. 2 is a side elevational view of the dicycle of Fig. 1;

Fig. 3 is a side elevational view of the dicycle with the control rods pushed in a forward position.;

Fig. 4 is a front elevational view of the dicycle with a wheel raised from the ground so as to change the direction;

Fig. 5 is a front elevational view of a dicycle according to the present invention including a saddle.

### Best Mode for Carrying Out the Invention

Embodiments of the present invention are hereinafter described with reference to attached drawings. Reference numeral 1 indicates a pair of wheels which are positioned in parallel; 2 a crankshaft; 3 a pair of pedals which are supported by the crankshaft in a freely rotatable manner. The wheels 1,1 rotate integrally with the crankshaft 2 both ends of which serve as the axle 4. Reference numeral 5 denotes control rods which are provided with grip members 6 at the upper end while lever members 7 are provided at the lower end thereof adjacent to the outside of the wheels 1,1 in a freely swingable manner around the axle 4 as their center. Control rods 5 are mounted on the outer edge of the wheels 1,1 according to this embodiment, but they may be mounted on the inner side as well. The control rods 5 are bent at the axle 4, but they do not necessarily have to assume this structure; they may be straight or curved in a bow-shape. In other words, it is acceptable so long as the tip of the lever members 7 touches the ground either in front or at the back of where the vertical line which runs through the axle 4 touches the grounds surface. Reference numeral 8 denotes casters, but pieces of small plate may be substituted. As long as they act to push up wheels and slide on the ground in any direction, they may be any other means than casters.

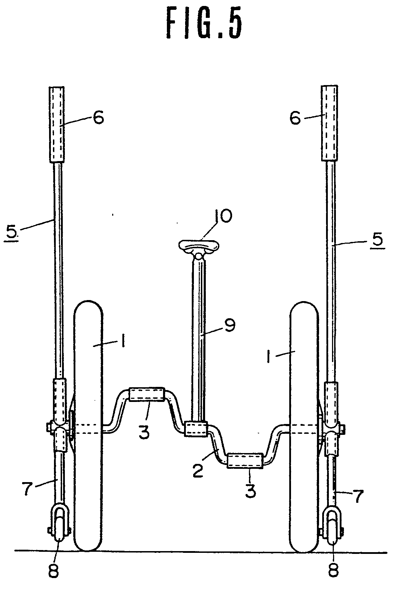

Fig. 5 shows another embodiment of the present invention in which a leg member 9 is installed at the center of the crankshaft 2 for mounting a saddle 10 on top thereof. This is designed mainly for practical use in mind.

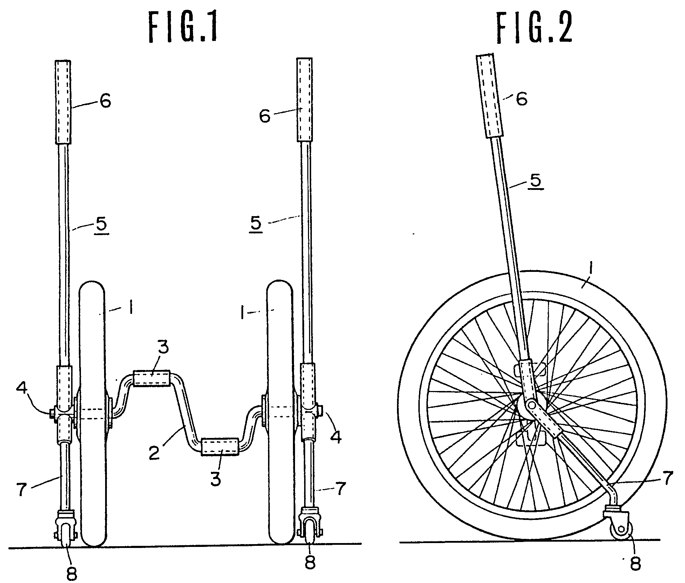

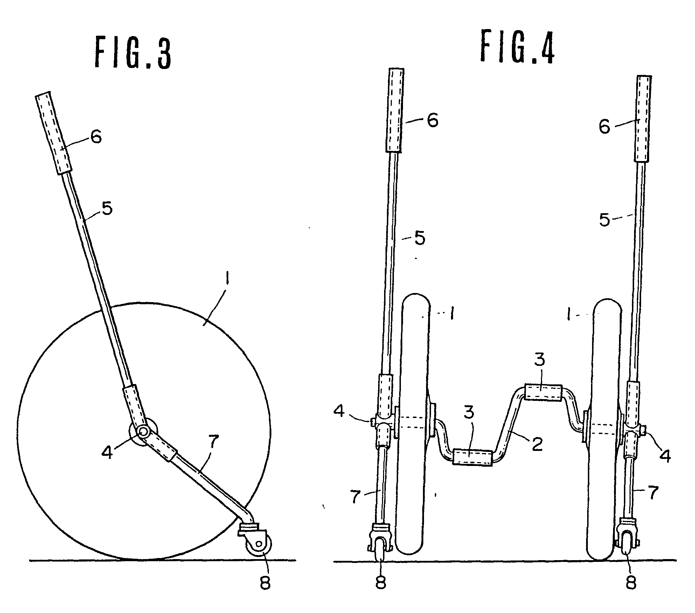

As the present invention is structured as aforementioned, if a rider mounts the dicycle by lightly pulling the control rods 5 by both hands, and cause the lever members 7 to touch the ground surface as shown in Figs. 1 and 2, wheels 1,1 will become stable, allowing the rider to mount easily. Once a rider learns to mount the dicycle freely, he may push the control rods 5 forward to cause the lever members 7 off the grounds as shown in Fig. 3, and the dicycle will then run lightly, go up a hill with ease, can be freely reversed, and provide the rider an ample exercise.

When changing directions, turning left, for example, the rider only has to draw the left control rod 5 fairly strongly. The lever member 7 will push the ground and the left wheel 1 will more or less float in the air to rotate idly as shown in Fig. 4, leaving only the right wheel to be actually working. This enables an easy left turn. Turning right may be achieved in a similar manner.

Industrial Applicability

The present invention provides a dicycle in which changing direction while running is achieved by a simple operation of a control rod. It is not as difficult as riding a monocycle. Larger wheels may be used and a simple detachable roof may be provided by using the tips of the control rods. The dicycle according to the present invention will serve as a health equipment, for leisure activities and for practical purposes.

**Claims**

1. A dicycle comprising a pair of parallel wheels (1,1) and a crankshaft (2) provided with foot pedals (3) for rotating the wheels, said wheels (1,1) being attached to both ends of the crankshaft (2) acting as an axle (4), in which control rods (5) are provided and lever members (7) of said control rods (5), which are lower than the axle (4), are so constructed as to contact the ground at a position different from where the vertical line passing the center of the axle so touches it, characterized in that said control rods (5) are pivotable about said axle (4), so that, by pulling said control rods (5), the rider can cause the tips of the lever members (7) to push the ground, so as to cause the wheel (1) on the side where the control rod (5) is pulled to raise from the ground and to rotate idly.

2. The dicycle according to claim 1, characterized in that a saddle (10) is mounted at the center of the crankshaft (2).

3. The dicycle according to claim 1, characterized in that casters (8) are provided at the tip of lever members (7) which are the lower part of control rods (5).

**Patentansprüche**

1. Eine Doppelradanordnung beinhaltend ein Paar paralleler Räder (1,1) und eine Kurbelwelle (2), die mit Pedalen (3) zum Drehen der Räder versehen ist, wobei die genannten Räder (1,1) an den beiden Enden der Kurbelwelle (2), die als Achse (4) wirkt, angeordnet sind, wobei Steuerstangen (5) vorgesehen sind und Hebelteile (7) der genannten Steuerstangen (5), die niedriger liegen as die Achse (4) und so konstruiert sind, daß sie den Boden an einer Stelle unterschiedlich derjenigen kontaktieren, an der die vertikale Linie durch die Mitte der Achse auftrifft, dadurch gekennzeichnet, daß die genannten Steuerstangen (5) drehbar um die genannte Achse (4) sind derart, daß durch Ziehen der Steuerstangen (5) der Benutzer die Spitzen der Hebelteile (5) zum Anstoßen des Bodens bringen kann und dadurch das Rad (1) auf derjenigen Seite, auf der die Steuerstange (5) gezogen wird, dazu bringen kann, vom Boden abzuheben und Leerzulaufen.

2. Doppelradanordnung nach Anspruch 1, dadurch gekennzeichnet, daß ein Sattel (10) in der Mitte der Kurbelwelle (2) angeordnet ist.

3. Doppelradanordnung nach Anspruch 1, dadurch gekennzeichnet, daß Lenkrollen (8) an der Spitze der Hebelteile (7) vorgesehen sind, die die unteren Abschnitte der Steuerstangen (5) sind.

**Revendications**

1. Véhicule comprenant deux roues parallèles (1,1) et un arbre à manivelles (2) pourvu de pédales (3) pour entraîner les roues en rotation, lesdites roues (1,1) étant liées aux deux extrémités de l'arbre (2) agissant comme un essieu (4), dans lequel des barres de commande (5) sont prévues avec des organes formant leviers (7), qui sont situés plus bas que l'essieu (4) et sont conçus de manière à entrer en contact avec le sol un point différent de la projection verticale sur ce sol du centre de l'essieu, caractérisé en ce que lesdites barres de commande (5) sont montées pivotantes autour dudit essieu (4), de telle sorte que, en tirant ces barres de commande (5), l'utilisateur provoque une pousée contre le sol des extrémités des organes formant leviers (7), de manière que la rou (1) située de côté où la barre de commande (5) est tirée soit soulevée du sol et tourne à vide.

2. Véhicule à deux roues selon la revendication 1, caractérisé en ce qu'une selle (10) est montée au milieu de l'arbre à manivelles (2).

3. Véhicule à deux roues selon la revendication 1, caractérisé en ce que des roulettes (8) sont prévues à l'extrémité des organes formant leviers (7), qui sont les parties inférieures des barres de commande (5).

# FIG.1

# FIG.2

# FIG.3

# FIG.4

# FIG.5